# EUROPÄISCHE PATENTSCHRIFT

(11) **EP 3 344 966 B1**
(45) Veröffentlichungstag und Bekanntmachung des Hinweises auf die Patenterteilung: **07.08.2019**
(21) Anmeldenummer: 16716530.7
(22) Anmeldetag: 12.04.2016
(51) Int. Cl.: G01L 7/08, G01L 9/00

(54) **DRUCKSENSORANORDNUNG SOWIE MESSUMFORMER ZUR PROZESSINSTRUMENTIERUNG MIT EINER DERARTIGEN DRUCKSENSORANORDNUNG**
PRESSURE SENSOR ARRANGEMENT AND MEASURING TRANSDUCER FOR PROCESS INSTRUMENTATION HAVING SUCH A PRESSURE SENSOR ARRANGEMENT
ENSEMBLE CAPTEUR DE PRESSION ET TRANSDUCTEURS DE MESURE POUR L'INSTRUMENTATION DE PROCESSUS À L'AIDE D'UN TEL ENSEMBLE CAPTEUR DE PRESSION

(30) Priorität: 31.08.2015 DE 102015216626
(43) Veröffentlichungstag der Anmeldung: 11.07.2018
(73) Patentinhaber: Siemens Aktiengesellschaft, 80333 München (DE)
(72) Erfinder: ERDLER, Gilbert Alexander, 76275 Ettlingen (DE); VON DOSKY, Stefan, 76149 Karlsruhe (DE)
(86) Internationale Anmeldenummer: PCT/EP2016/057979
(87) Internationale Veröffentlichungsnummer: WO 2017/036613

(56) Entgegenhaltungen:
- DE-A1- 3 310 538
- DE-A1-102008 002 671
- NL-A- 6 516 420
- US-A- 3 505 875

## Beschreibung

Drucksensoranordnung sowie Messumformer zur Prozessinstrumentierung mit einer derartigen Drucksensoranordnung Die Erfindung betrifft eine Drucksensoranordnung gemäß dem Oberbegriff des Anspruchs 1.

Eine derartige Drucksensoranordnung ist aus der EP 2 294 376 B1 und DE 10 2008 002 671 A1 bekannt.

Die Erfindung betrifft ferner einen Messumformer zur Prozessinstrumentierung mit einer derartigen Drucksensoranordnung gemäß Anspruch 5.

In prozesstechnischen Anlagen werden zur Steuerung von Prozessen vielfältige Feldgeräte für die Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen entsprechend einer beispielsweise von einer speicherprogrammierbaren Steuerung oder einer Leitstation vorgegebenen Strategie beeinflusst werden. Als Beispiele für Stellglieder seien ein Regelventil, eine Heizung oder eine Pumpe genannt. Insbesondere in verfahrenstechnischen Anlagen stellen Druckmessumformer wesentliche sensorische Komponenten im Rahmen von automatisierten Produktionsabläufen dar. Im Hinblick auf ein optimales Anlagenverhalten und eine dauerhaft hohe Produktqualität sind qualitativ hochwertige Messumformer notwendig, die auch unter extremen Bedingungen langzeitstabile und wenig fehlerbehaftete Messwerte liefern.

Aus der DE 196 08 321 C2 ist eine Drucksensoranordnung mit einem Überlastschutzsystem bekannt, die als Aufnehmer oder Messzelle in einem Messumformer für Differenzdruck eingesetzt werden kann. Die bekannte Messzelle ist ölbefüllt, sodass der eigentliche Drucksensor von einem eventuell aggressiven Prozessmedium getrennt ist. Das Überlastschutzsystem besteht aus mehreren zueinander korrespondierenden Membranen sowie einer exakt daran angepassten Ölbefüllung. Die Konstruktion einer derartigen Messzelle ist daher vergleichsweise aufwendig, und es werden zur Herstellung der Messzelle eine Vielzahl von Schweißprozessen benötigt. Zudem unterliegen die Toleranzketten der Teilegeometrie, der Materialeigenschaften und der Schweißparameter hohen Genauigkeitsanforderungen. Die elektrischen Kontaktierungen des eigentlichen Drucksensors müssen beispielsweise über hochdruckfeste Glasdurchführungen aus dem druckbeaufschlagten Innenraum der Messzelle nach außen zu einer Elektronikeinheit geführt werden, in welcher die Signalverarbeitung zur Bestimmung des Druckmesswerts durchgeführt wird.

Bei der aus der EP 2 294 376 B1 bekannten Drucksensoranordnung wird zur Druckerfassung eine Membran mit mehreren zueinander abgewinkelten Membranabschnitten verwendet. Ein Membranabschnitt ist als Trennmembran im Querschnitt eines Druckrohrs angeordnet und ein dazu abgewinkelter Membranabschnitt als Seitenwandmembran im Bereich der Druckrohrwandung. Eine an der Trennmembran anliegende Druckdifferenz führt zu deren Deformation, die sich aufgrund eines festen Winkels zwischen den beiden Membranabschnitten auf die Seitenwandmembran überträgt, sodass die dadurch bedingte Deformation der Seitenwandmembran ebenfalls die Druckverhältnisse innerhalb des Druckrohrs wiedergibt. Mittel zum Erfassen einer Membrandeformation werden auf der Außenseite der Seitenwandmembran angeordnet, damit diese nicht in Kontakt zum Medium, dessen Druck gemessen werden soll, stehen. Aufgrund der Anordnung des ersten Membranabschnitts als Trennmembran im Querschnitt des Rohrs kann die bekannte Drucksensoranordnung sowohl als Absolutdrucksensor eingesetzt werden als auch als Differenzdrucksensor, je nachdem, ob auf der einen Seite der Trennmembran ein definierter Referenzdruck anliegt oder die Trennmembran beidseitig mit einem Messdruck beaufschlagt wird. Die bekannte Drucksensoranordnung ist für einen Einsatz im Rahmen der Überwachung von Dieselpartikelfiltern vorgesehen, um den Abgasdruck vor und hinter dem Partikelfilter zu messen und so den Stand seiner Beladung zu ermitteln. Dabei tritt, im Unterschied zur Prozessinstrumentierung, ein allenfalls geringer statischer Druck auf. Bei der beschriebenen Drucksensoranordnung ist jedoch die Differenzdruckmessung vom statischen Druck, der insbesondere zu einer Deformation der Seitenwandmembran führt, in nachteiliger Weise stark abhängig und dessen Kompensation nur unzureichend möglich, da diese eine exakte Positionierung der auf der Rohraußenwand applizierten Dehnungsaufnehmer voraussetzt, die in der Praxis kaum mit der erforderlichen Genauigkeit erreichbar ist.

Die NL 6 516 420 A offenbart eine Kraftmessvorrichtung mit einem kreisscheibenförmigen Verformungsteil, das im Umfangsbereich eine geringere Dicke aufweist als in seinem mittleren Bereich.

Der Erfindung liegt die Aufgabe zugrunde, eine Drucksensoranordnung zu schaffen, die sich durch einen einfachen konstruktiven Aufbau auszeichnet und gleichzeitig für einen Einsatz in einem Messumformer zur Prozessinstrumentierung geeignet ist.

Zur Lösung dieser Aufgabe weist die neue Drucksensoranordnung der eingangs genannten Art die im kennzeichnenden Teil des Anspruchs 1 angegebenen Merkmale auf. In den abhängigen Ansprüchen sind vorteilhafte Weiterbildungen der Erfindung, in Anspruch 5 ein Messumformer zur Prozessinstrumentierung mit einer derartigen Drucksensoranordnung beschrieben.

Insbesondere gegenüber der Drucksensoranordnung, welche aus der bereits eingangs genannten DE 196 08 321 C2 bekannt ist, hat die neue Anordnung mit einem Rohr, in dessen Querschnitt eine mit dem zu messenden Druck beaufschlagte Membran angeordnet ist, den Vorteil, dass ihr konstruktiver Aufbau erheblich einfacher ist, da keine Ölfüllung, kein korrespondierendes Überlastschutzsystem, keine druckfeste Glasdurchführung und keine Schweißverbindungen erforderlich sind. Ein Sensor zur Erfassung der Verdrehung des Gelenks kann in vorteilhafter Weise außerhalb des medienberührten Raumes angeordnet werden, sodass es zu keiner Interaktion zwischen Sensor und Füllöl oder Prozessmedium kommen kann. Dadurch wird eine Drucksensoranordnung mit hoher Langzeitstabilität und robustem Design erhältlich. Da die Membran zudem keinem statischen Druck ausgesetzt ist, besteht keine Überlastgefahr für die Drucksensoranordnung. Rohr und Membran können aus Stahl als einteiliges Bauelement vorwiegend durch Drehen mit vergleichsweise geringem Aufwand hergestellt werden.

Aufgrund der Ausnehmung in der Außenwand des Rohrs und die resultierende lokale Verringerung der Rohrdicke reicht der Bereich verminderter Biegesteifigkeit, durch welchen das Gelenk als Festkörpergelenk ausgebildet wird, zum Teil in die Rohrwand hinein, sodass im lokalen Bereich der Ausnehmung auch diese die Funktion des Festkörpergelenks zumindest teilweise übernimmt. Die Verdrehung des Gelenks äußert sich somit auch an der Rohraußenseite als Oberflächendehnung oder Stauchung und kann somit von außen auf besonders einfache Weise messtechnisch erfasst werden.

Dabei wird eine Verringerung der Materialermüdung bei Dauerbeanspruchung und damit eine Verbesserung der Lebensdauer der Drucksensoranordnung dadurch erreicht, dass in der Ausnehmung ein mittig zur Membranebene verlaufender, zum Teil in die Membran hineinragender Spalt eingearbeitet wird, dessen Breite geringer als die Membrandicke ist. Als besonders vorteilhaft hat sich dabei eine Spaltbreite zwischen etwa einem Drittel und der Hälfte der Membrandicke erwiesen. Durch diese Maßnahme wird die Biegesteifigkeit insbesondere im äußersten Randbereich der Membran, in welchem die Membran an die Rohrwand stößt, verringert.

In einer besonders vorteilhaften Ausgestaltung der Erfindung weist die Membran zur Realisierung des Gelenks in ihrem Umfangsbereich eine geringere Dicke auf als in ihrem mittleren Bereich, der dann die eigentliche Membran repräsentiert. Das hat den Vorteil, dass die Randzone aufgrund der geringeren Materialdicke eine geringere Biegesteifigkeit besitzt, die zu einer Aufhängung der Membran mittels eines Festkörpergelenks führt. Auf diese Weise wird ein Gelenk mit besonders einfacher Konstruktion und geringem Herstellungsaufwand erhalten. Die Funktion des Gelenks wird somit durch den Randbereich verminderter Biegesteifigkeit relativ zum daran angrenzenden Bereich größerer Dicke, welcher die eigentliche Membran repräsentiert, und relativ zum an der anderen Seite angrenzenden Rohr höherer Biegesteifigkeit erreicht.

Eine hohe Empfindlichkeit bei der Erfassung der Membrandeformation, ohne den dazu erforderlichen Wandler mit einem Prozessfluid in Kontakt bringen zu müssen, kann in vorteilhafter Weise erzielt werden, wenn ein Dehnungssensor in der Ausnehmung auf der Außenseite des Rohrs zur Erfassung einer von der Verdrehung des Gelenks abhängigen Oberflächendehnung angeordnet wird.

Aufgrund der Robustheit, Druckfestigkeit und Unempfindlichkeit gegenüber statischem Druck ist die Drucksensoranordnung besonders für einen Einsatz als Messzelle oder Aufnehmer in einem Messumformer zur Prozessinstrumentierung geeignet.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: eine Schnittdarstellung einer Drucksensoranordnung und
- Figur 2: einen vergrößerten Ausschnitt der Drucksensoranordnung gemäß Figur 1.

In den Figuren sind gleiche Teile mit gleichen Bezugszeichen versehen.

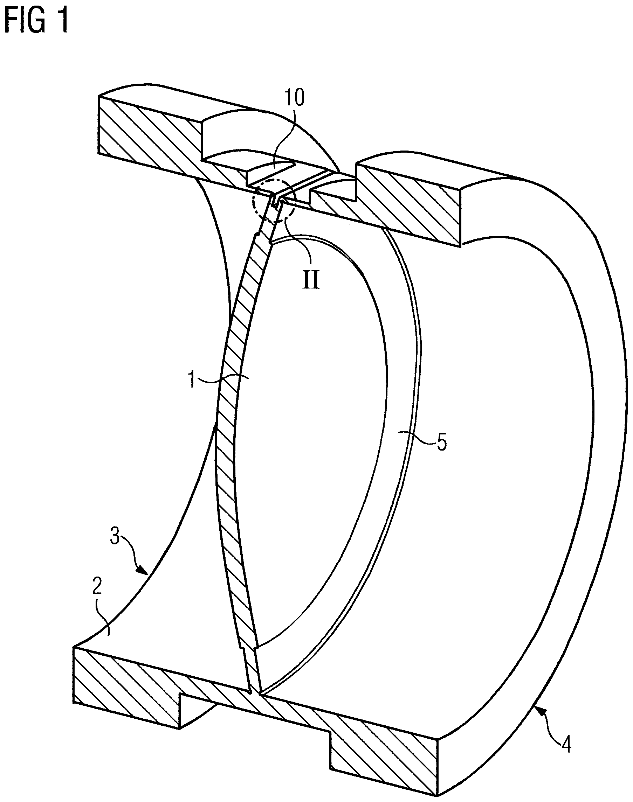

In dem Längsschnitt gemäß Figur 1 ist die prinzipielle Anordnung einer Membran 1 im Querschnitt eines Rohrs 2 gut erkennbar. Bei einer Verwendung der dargestellten Drucksensoranordnung in einem Druckmessumformer zur Prozessinstrumentierung können die beiden Enden 3 und 4 des Rohrs 2 jeweils mit einer in Figur 1 nicht dargestellten Kappe verschlossen werden, über welche Prozessmedium mit dem zu messenden Druck einer Seite der Membran 1 bei einem Absolutdrucksensor oder beiden Seiten der Membran 1 bei einem Differenzdrucksensor zugeführt werden kann. Eine Elektronikeinheit zur Auswertung der durch die Drucksensoranordnung erzeugten, vom jeweils zu messenden Druck abhängigen elektrischen Signale kann auf herkömmliche Art und Weise gestaltet sein und ist ebenfalls in Figur 1 nicht dargestellt. In Figur 1 wird deutlich, dass sich der konstruktive Aufbau einer Differenzdruckmesszelle bei Verwendung einer Membran 1, die über ein Festkörpergelenk 5 mit der Innenwand des Rohrs 2 verbunden ist, gegenüber einer herkömmlichen Messzelle mit Überlastschutzsystem erheblich vereinfacht. Das Prozessmedium wird im Falle eines Differenzdruckmessumformers direkt auf beide Seiten der Membran 1 geführt, es wird keine Ölfüllung und keine aufwendige Konstruktion eines Überlastschutzsystems benötigt, Schweißprozesse und eine druckfeste Glasdurchführung für elektrische Signale können entfallen. Zudem können Rohr 2 und Membran 1 überwiegend durch Drehen aus einem Teil gefertigt werden. Die Abmessungen der Messzelle können so gestaltet werden, dass sie im Hinblick auf ihre mechanischen Schnittstellen zu den übrigen Komponenten eines Messumformers kompatibel zu herkömmlichen Messzellen ist, sodass lediglich die Messzelle, d. h. die gezeigte Drucksensoranordnung, ausgetauscht werden muss und Flanschteile, Gehäuse etc. vom herkömmlichen Messumformer übernommen werden können.

In einer praktischen Realisierung bestehen Rohr 2 und Membran 1 beispielsweise aus Stahl, wobei die Membran 1 eine Dicke von etwa 2 mm und einen Durchmesser von etwa 55 mm aufweist.

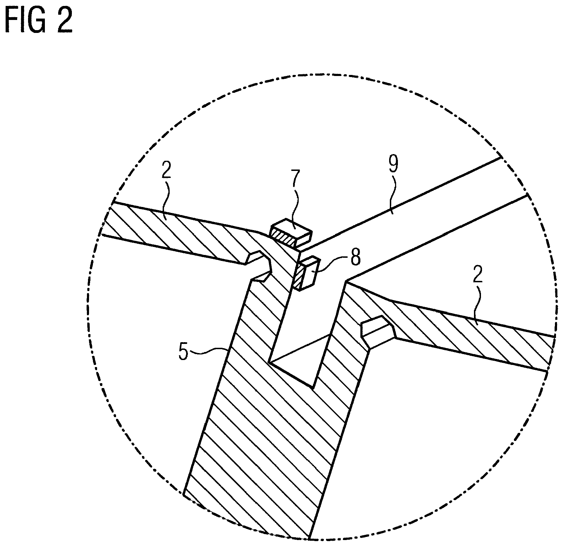

Figur 2 zeigt eine Vergrößerung des Ausschnitts II aus Figur 1, in welcher insbesondere Möglichkeiten zur Anbringung von Mitteln, hier in Form von Dehnungsaufnehmern 7 und/oder 8, zur Erfassung der druckabhängigen Deformation der Membran 1 aufgezeigt werden. Selbstverständlich genügt in einer praktischen Realisierung die Anbringung nur eines Dehnungsaufnehmers 7 bzw. 8 zur Erzeugung elektrischer Signale, die zur Bestimmung eines Druckwerts durch eine nicht dargestellte Elektronikeinheit ausgewertet werden können. Die Montage der Dehnungsaufnehmer 7 und/oder 8 kann durch eine langzeitstabile, nicht kriechende Aufglasung auf dem jeweils verwendeten Material des Rohrs 2, z. B. Edelstahl, erfolgen. Vorzugsweise wird ein sehr kleiner, quasi punktuell messender piezoresistiver Dehnungssensor verwendet, der als Wheatstone-Vollbrücke ausgestaltet ist. Dann haben aufgrund der sehr kleinen Bauform räumliche Temperaturgradienten über dem vergleichsweise großen, je nach Material eventuell schlecht wärmeleitenden Rohr 2 der Messzelle nur geringen Einfluss auf die Messung.

Die beiden Figuren zeigen einen Zustand, in welchem der Druck des Prozessmediums auf der rechten Seite der Membran 1 erheblich höher als auf der linken Seite ist. Dies führt zu einer Auslenkung der Membran nach links und zu einer Verdrehung des Gelenks 5, wie es in Figur 2 deutlich sichtbar ist. Die Verdrehung des Gelenks 5 kann mittels der Dehnungsaufnehmer 7 und/oder 8, die im Bereich der größten mechanischen Spannungen positioniert sind, mit großer Empfindlichkeit detektiert werden. Der an der Membran 1 anliegende Druck ist dabei im Wesentlichen proportional zu den an der Außenwand des Rohrs 2 messbaren mechanischen Spannungen. Durch eine Ausnehmung 10 (Figur 1) ist die Dicke der Wand des Rohrs 2 lokal in dem Bereich, der zur Anbringung der Mittel 7, 8 zur Erfassung der Deformation vorgesehen ist, etwas verringert. Zudem ist ein Spalt 9 mittig zur Ebene der Membran 1 zum Teil in den Bereich des Gelenks 5 eingearbeitet. Das hat den Vorteil, dass der Bereich verminderter Biegesteifigkeit, durch welchen das Festkörpergelenk zwischen Membran 1 und Rohr 2 realisiert ist, zum Teil in die Rohrwand hineinreicht, sodass diese zumindest teilweise die Funktion des Festkörpergelenks übernimmt. Zudem werden Scherspannungen im äußeren Gelenkbereich durch den Spalt 9 reduziert. Bei einer Anwendung der Drucksensoranordnung in einem Messumformer zur Prozessinstrumentierung kann bei Bedarf in einem Hals, der zur Verbindung eines Elektronikgehäuses mit dem Rohr 2 über der Ausnehmung 10 aufgeschweißt wird, aus Sicherheitsgründen eine stabile Kappe vorgesehen werden, die im Falle eines Durchbrechens der Rohrwand an der verdünnten Stelle ein Austreten des Prozessfluids in das Elektronikgehäuse hinein verhindert.

In Figur 2 wird besonders deutlich, dass durch die Ausbildung eines Festkörpergelenks 5 im Bereich zwischen Membran 1 und Wand des Rohrs 2 sowie ergänzend durch die Ausnehmung 10 in der Wand die dem Differenzdruck proportionale Auslenkung der Membran 1 aus dem medienberührten Bereich des Rohrinneren nach außen geführt wird. Im Bereich der maximalen mechanischen Dehnung, die aufgrund der besonderen Gestaltung der Drucksensoranordnung hohe Werte annimmt, können Dehnungssensoren 7 und/oder 8 appliziert werden, welche die mechanische Dehnung in ein der Auslenkung der Membran 1 proportionales elektrisches Signal wandeln. Durch einen derartigen Aufbau einer Messzelle ergeben sich somit deutliche konstruktive Vorteile im Vergleich zu herkömmlich aufgebauten Messzellen von Druckmessumformern der Prozessinstrumentierung, die im Folgenden noch einmal kurz zusammengefasst werden:
- kein Überlastschutzsystem mit Ölfüllung notwendig,
- einfacher preiswerter Aufbau in der Serienfertigung,
- Dehnungssensor außerhalb des medienberührten Raumes,
- daher keine Reaktion mit dem Füllöl und robustes Design,
- Membran wird keinem statischen Druck ausgesetzt und somit keine Überlastgefahr für die Drucksensoranordnung,
- keine drucksichere Glasdurchführung notwendig, um elektrische Signale aus dem mit Druck beaufschlagten Innenraum der Messzelle herauszuführen,
- deutliche Reduzierung der Zahl der benötigten Bauteile,
- keine toleranzbehafteten Schweißprozesse von Stahlmembranen und
- bei Verwendung von Dehnungssensoren mit Vollbrückenschaltung gute Temperaturkompensation.

In einer Abwandlung der beschriebenen Detektion einer Verdrehung des Gelenks 5, welches im Ausführungsbeispiel durch eine Verjüngung der Membran 1 in ihrem Randbereich realisiert ist, durch die Dehnungsaufnehmer 7 und/oder 8, könnte die Verdrehung alternativ oder ergänzend durch einen Zeiger erfasst werden, welcher beispielsweise am Boden des Spalts 9 befestigt und aus dem Spalt 9 herausragend die Verdrehung nach außen führt. Selbstverständlich sind noch weitere, nicht näher erläuterte Alternativen der Verdrehungserfassung im Rahmen der vorliegenden Erfindung denkbar.

## Patentansprüche

1. Drucksensoranordnung mit einem Rohr (2), in dessen Querschnitt eine mit dem zu messenden Druck beaufschlagte Membran (1) angeordnet ist, wobei die Membran (1) an der Rohrinnenwand mittels eines entlang des Umfangsbereichs der Membran (1) verlaufenden Gelenks (5) befestigt ist, die Außenwand des Rohrs (2) in einem der Membran (1) gegenüberliegenden Bereich mit einer Ausnehmung (10) zur Verringerung der Rohrdicke versehen ist und in der Ausnehmung (10) Mittel zur Erfassung einer von einer Deformation der Membran (1) abhängigen Verdrehung des Gelenks (5) vorgesehen sind, **dadurch gekennzeichnet, dass** in der Ausnehmung (10) ein mittig zur Membran (1) verlaufender, zum Teil in die Membran (1) hineinragender Spalt (9) angeordnet ist, dessen Breite geringer als die Membrandicke ist.

2. Drucksensoranordnung nach Anspruch 1, **dadurch gekennzeichnet, dass** die Membran (1) zur Realisierung des Gelenks (5) in ihrem Umfangsbereich eine geringere Dicke aufweist als in ihrem mittleren Bereich.

3. Drucksensoranordnung nach Anspruch 1 oder 2, **dadurch gekennzeichnet, dass** die Mittel zur Erfassung der Verdrehung des Gelenks (5) mindestens einen Dehnungssensor (7, 8) umfassen, der in der Ausnehmung (10) auf der Außenseite des Rohrs (2) zur Erfassung einer von der Verdrehung des Gelenks (5) abhängigen Oberflächendehnung angeordnet ist.

4. Drucksensoranordnung nach einem der vorangehenden Ansprüche 3, **dadurch gekennzeichnet, dass** die Mittel zur Erfassung der Verdrehung des Gelenks (5) einen Zeiger umfassen, welcher am Boden des Spalts (9) befestigt ist und aus dem Spalt (9) herausragend die Verdrehung nach außen führt.

5. Messumformer zur Prozessinstrumentierung mit einer Drucksensoranordnung nach einem der vorhergehenden Ansprüche.

## Claims

1. Pressure sensor arrangement having a tube (2) in the cross section of which there is disposed a diaphragm (1) to which the pressure to be measured is applied, wherein the diaphragm (1) is fastened to the inner wall of the tube by means of an articulation (5) running along the circumferential region of the diaphragm (1), the outer wall of the tube (2) is provided with a recess (10) to reduce the tube thickness in a region opposite the diaphragm (1) and means are provided in the recess (10) for detecting a rotation of the articulation (5) as a function of a deformation of the diaphragm (1), **characterised in that** there is disposed in the recess (10) a gap (9) running centrally with respect to the diaphragm (1), partly protruding into the diaphragm (1) and the width of which is less than the diaphragm thickness.

2. Pressure sensor arrangement according to claim 1, **characterised in that** the diaphragm (1) for implementing the articulation (5) is thinner in its circumferential region than in its central region.

3. Pressure sensor arrangement according to claim 1 or 2, **characterised in that** the means for detecting the rotation of the articulation (5) comprise at least one a strain sensor (7, 8), which is disposed in the recess (10) on the outside of the tube (2) to detect a surface strain as a function of the rotation of the articulation (5).

4. Pressure sensor arrangement according to one of the preceding claims 3, **characterised in that** the means for detecting the rotation of the articulation (5) comprise a pointer which is fixed to the bottom of the gap (9) and, protruding from the gap (9), directs the rotation outward.

5. Measuring transducer for process instrumentation having a pressure sensor arrangement according to one of the preceding claims.

## Revendications

1. Agencement formant capteur de pression et comprenant un tube (2) dans la section transversale duquel est disposée une membrane (1) soumise à la pression à mesurer, la membrane (1) étant fixée à la paroi intérieure du tube au moyen d'une articulation (5) s'étendant le long de la partie de pourtour de la membrane (1), la paroi extérieure du tube (2) étant, dans une partie opposée à la membrane (1), pourvue d'un évidement (10 ) pour diminuer l'épaisseur du tube et il est prévu dans l'évidement (10 ) des moyens de détection d'une torsion, qui dépend de la déformation de la membrane (1), de l'articulation, **caractérisé en ce que**, dans l'évidement, est prévu un intervalle (9), qui s'étend au milieu par rapport à la membrane (1), qui pénètre en partie dans la membrane (1) et dont la largeur est plus petite que l'épaisseur de la membrane.

2. Agencement formant capteur de pression suivant la revendication 1, **caractérisé en ce que** la membrane a, pour réaliser l'articulation (5), dans sa partie périphérique, une épaisseur plus petite que dans sa partie médiane.

3. Agencement formant capteur de pression suivant la revendication 1 ou 2, **caractérisé en ce que** les moyens de détection de la torsion de l'articulation (5) comprennent au moins un capteur (7, 8) d'extension, qui est disposé dans l'évidement (10 ) du côté extérieur du tube (2) pour détecter une extension de surface, qui dépend de la torsion de l'articulation (5).

4. Agencement formant capteur de pression suivant la revendication 3 précédente, **caractérisé en ce que** les moyens de détection de la torsion de l'articulation (5) comprennent une aiguille, qui est fixée au fond de l'intervalle (9) et qui, en sortant de l'intervalle (9), conduit la torsion vers l'extérieur.

5. Transducteur de mesure pour l'instrumentation de processus, comprenant un agencement formant capteur de pression suivant l'une des revendications précédentes.
